# EUROPEAN PATENT SPECIFICATION

(11) **EP 0 611 954 B1**
(45) Date of publication and mention of the grant of the patent: **20.11.1996**
(21) Application number: 93401838.3
(22) Date of filing: 15.07.1993
(51) Int. Cl.: G01D 21/02, G01D 11/24, G01L 19/14, G01C 5/06, B63C 11/02

(54) **Diver's pivotal gauge boot**
Konsole mit schwenkbaren Messinstrumenten für Taucher
Console avec instruments de mesure pivotants pour plongeurs

(30) Priority: 19.01.1993 US 3856; 16.03.1993 US 33165
(43) Date of publication of application: 24.08.1994
(73) Proprietor: U.S. DIVERS COMPANY, INC., Santa Ana, California 92799-5018 (US)
(72) Inventor: Hermansen, Frank, Newport Beach, California 92663 (US)
(74) Representative: Le Moenner, Gabriel

(56) References cited:
- DE-A- 4 119 393
- US-A- 3 861 417
- US-A- 4 466 283
- US-A- 4 638 666

## Description

### FIELD OF THE INVENTION

The field of this invention is within the diver's gauge art. More particularly, it pertains to instruments and gauges that are maintained in a single grouping or array to provide for multiple instrument and gauge readings. The gauges and instruments can be in the form of a breathing gas tank pressure gauge, a depth gauge, a timer, and a compass.

### PRIOR ART AND SOLUTIONS

Diver's gauges and instruments enclosed in boots are used by divers for among other things to determine depth. Such depth gauges can be in the form of an analog gauge having a bourdon tube meter which responds to various depths. Other gauges can also provide depth readings in the form of digital electronic readouts that correspond to depth based upon a transducer sensing a particular depth.

Other gauges include gauges connected to a diver's breathing gas tank. Such gauges including bourdon tube gauges determine the tank pressure so that the diver can determine how much breathing gas is left in the tank. These pressure gauges for reading tank pressure can also be based upon a transducer sensing tank pressure and providing an electronic readout.

It is also customary for divers to utilize a compass for determining bearing and location when undertaking a dive, as well as watches and timers.

The foregoing gauges, instruments and components have been combined as a single unit providing the foregoing readings and information. The units are oftentimes referred to as dive consoles or boots in which to hold the respective gauges, components, instruments, and compass.

Such gauge boots are generally connected to a tank of breathing gas by means of a hose. The hose is generally in the form of a high pressure hose which is connected directly to the pressure of the tank. The high pressure hose at the other end is in turn connected to a tank pressure gauge. The gauge indicates the amount or pressure of the gas and corresponds to the gas remaining in the tank.

Since diving requirements are such wherein tank pressure must be read, the utilization of a high pressure hose connected to the tank pressure gauge is usually a requisite of any dive gauge boot containing a plurality of gauges. As a consequence, the boot is usually such wherein it is tethered or connected to the tank by means of the high pressure hose.

A second gauge in the form of a depth gauge is also utilized. The depth gauge indicates to the diver the degree of depth the diver has descended to. The information is quite critical to the diver. The depth gauge is also often seated in the gauge boot in conjunction with the tank pressure gauge. See for example, U.S. Patent No. 4,466,283, Figure 1, which shows a pressure gauge (14) and depth gauge (20). Additionally, other gauges and instruments are utilized such as timers, watches, compasses, and instruments for the diver to determine the relative status of a dive.

In many cases the two respective depth and tank pressure gauges are usually placed in a boot in association with a compass.

It is a general rule that the depth gauge is highly important and generally read by a diver constantly due to the fact that the diver needs to know his depth. This stems from not only the standpoint of safety, but also to provide for decompression from a particular depth or series of depths to which a diver has dove. The information as to tank pressure and the compass bearing is not as often reviewed by a diver as in the case of the depth reading. Consequently, the orientation of the depth gauge in conjunction with the tank pressure and ccmpass bearing can be alternatively changed so long as the depth gauge reading is available to the diver.

In times past, divers have ganged side by side the respective gauges and compass together in a series of three (3). See for example, U.S. Patent No. 3,861,417, Figure 1 at 26 (pressure gauge), 48 (depth gauge) and 50 (compass).

In order to avoid ganging the respective instruments together in the form of a compass and gauges, this invention allows one of the gauges or compass to be rotated with respect to the other. This provides a reading that can be made of the compass or the tank pressure gauge depending on the desire of the diver while still maintaining a reading of the depth gauge. This makes for a more compact gauge boot.

Additionally, the invention hereof provides for a canted or angularly oriented depth gauge for ease and facility of reading by the diver.

Taken as a whole, the invention solves the problem of ganging multiple gauges, thereby providing for small compact and readily accessible and easily read gauges and instruments within a dive gauge boot.

### SUMMARY OF THE INVENTION

In summation, this invention comprises a diver's gauge boot having a depth gauge, a compass, and a tank pressure gauge or other instruments which can be mounted on opposite sides and rotated with respect to each other for purposes of viewing.

More particularly, the invention comprises a depth gauge portion which is rotatably connected to a second portion for relative movement with respect thereto. The second portion can be directly connected to a tank of breathing gas. When connected to a tank of breathing gas, the pressure therein can be sensed and read by a tank pressure gauge. This serves to accommodate the requirements of the diver when reading the depth as well as the pressure.

Mounted on the opposite side from the tank pressure gauge is a compass. The compass and the tank pressure gauge can be rotated relative to the depth gauge so that one or the other can be read in conjunction with the depth gauge.

The foregoing enhances the ability to provide for a compact diver's gauge boot wherein the depth can constantly be read while at the same time the tank pressure and compass bearings can be alternately provided depending upon a diver's choice.

### BRIEF DESCRIPTION OF THE DRAWINGS

Figure 1 shows a perspective view of the diver's gauge boot of this invention.

Figure 1A shows the diver's gauge boot of Figure 1 with the instrument opposite from that shown in Figure 1 rotated into a viewing position.

Figure 2 shows a plan view of the diver's gauge boot with a fragmented sectional view of the interconnected portions of the gauge boot at its rotatable joindure.

Figure 2A shows a sectional view of the detent and indexing means seen along lines 2A-2A of Figure 2.

Figure 3 shows a mid-line sectional view as sectioned through Figure 1, with the two respective portions of the gauge boot separated.

Figure 4 shows a fragmented sectional view of the interconnecting portions as they are being emplaced and joined.

Figure 5 shows a fragmented sectional view of the interconnection after the two portions have been connected.

Figure 6 shows a partial sectional view with the depth gauge being emplaced within the boot after connection of the respective portions of the boot.

### DESCRIPTION OF THE PREFERRED EMBODIMENTS

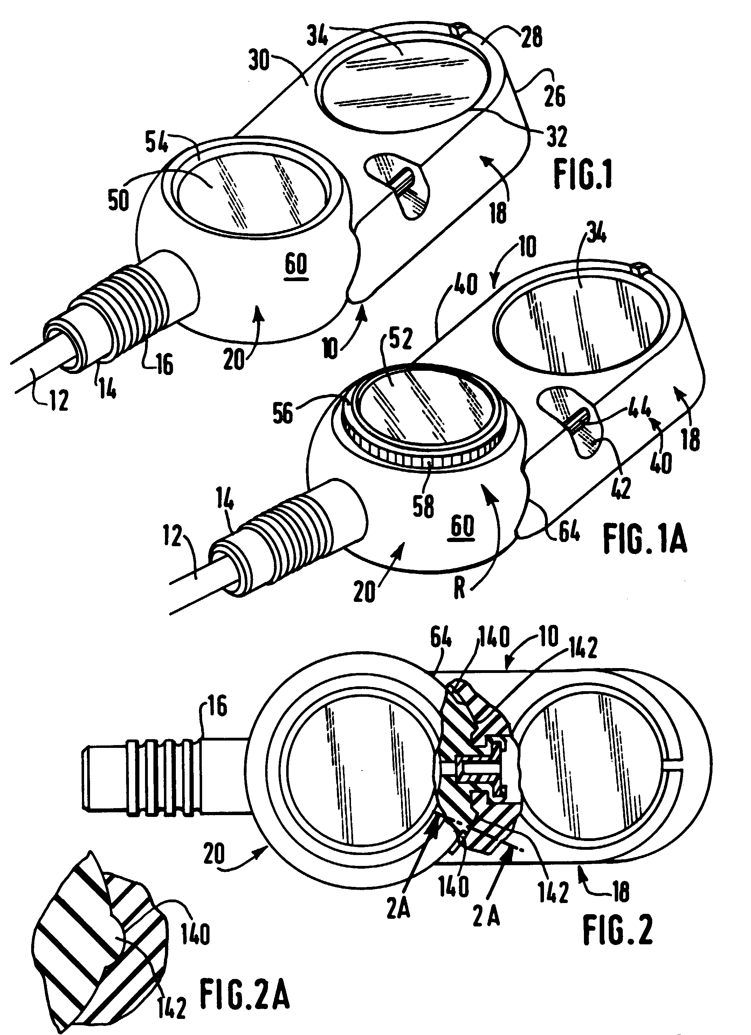

Looking at Figures 1 and 2 the gauge boot, cover, or console 10 for the gauges can be seen. The boot 10 for the gauges can be made of an elastomeric material such as a rubberized plastic, a resilient elastomer, or of numerous suitable plastics. In this particular case, it is made from a rubberized plastic to provide for flexibility, ease of assembly, as well as overall longevity when used in the oceanic environment.

The boot 10 is tethered by or connected to a tank of high pressure breathing gas by means of a high pressure hose 12. The hose 12 is fitted into a hose connection sleeve 14 which comprises a ribbed outer portion 16 that has been ribbed to allow flexibility of movement of the hose with respect to the gauge boot 10.

The sleeve 14 is formed as a portion of the gauge boot 10 to allow for flexibility while providing a protective sleeve around the high pressure hose 12.

The gauge boot 10 comprises two portions in the main. The first portion is an angularly oriented or canted depth gauge or rotatable portion 18. The second portion is a combination tank pressure gauge portion and compass portion 20. The tank pressure gauge and compass portion 20 can be rotated in relative relationship to the depth gauge portion 18. The relative rotation can be with the depth gauge portion 18 turning around its axis in relationship to the tank gauge pressure and compass portion 20. It becomes a matter of relative relationship as to which turns with respect to the other. Suffice it to say, portions 18 and 20 can turn with respect to each other to allow for an angular depth gauge portion to be read with respect to tank pressure or in the alternative compass bearings.

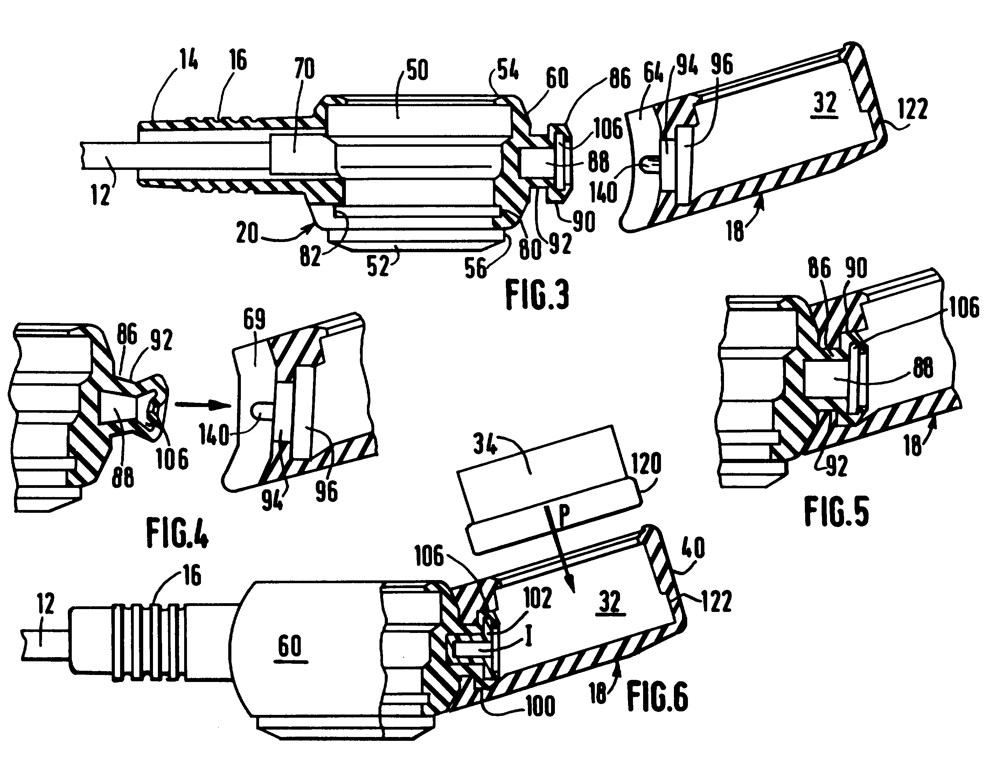

The depth gauge portion 18 is formed of a rubberized material in a configuration that will be detailed with respect to sectional Figures 3 through 6 as to their orientation and fit. The outside walls of the depth gauge portion are formed generally at intersecting right angles and terminate in a semi-circular wall portion 26. Wall portion 26 has a rounded arcuate portion 28 which forms a lip or flange 30 surrounding a pocket 32. The pocket 32 receives a depth gauge 34.

Within the side walls which can be defined as rubberized side wall sections 40, a slot 42 is formed. The slot 42 has a pin 44. The pin 44 spans the slot 42 and is molded into the rubberized walls 40 of the depth gauge portion 18. The pin 44 can receive a lanyard or other suitable tethering means, such as an eyelet, hook, or other means to hold the gauge boot 10 in relationship to the outer wear of a diver such as a belt, or attachment or fastening assemblies of a diver.

Looking more particularly at Figure 1A, it can be seen that the dive tank pressure gauge and compass portion 20 has been rotated with respect to the depth gauge portion 18. This is shown with regard to arrow R which shows the rotation of the tank pressure gauge portion 20 with respect to the depth gauge portion 18.

The tank pressure gauge or second portion 20 with the compass can be relatively rotated in any manner with respect to the depth gauge portion 18. The depth gauge portion 18 rotates around its axis with respect thereto or in the alternative the tank pressure gauge or second portion 20 rotates with respect to the depth gauge portion 18. The tank pressure gauge portion 20 encompasses a tank pressure gauge 50 on one side and a compass 52 on the other side. The tank pressure gauge portion 20 has a rim or flange 54 under which the tank pressure gauge 50 is seated. This rim 54 is a round circular rim and encompasses the tank pressure gauge 50 therein.

A compass 52 on the other side of the tank pressure gauge 50 has a bezel 56 having a knurled portion 58. The knurled portion allows the compass bezel 56 to be rotated for placing the bezel into various bearing orientations with regard to the compass 52 needle.

The second portion or tank pressure gauge portion and compass portion 20 is formed with a rounded circular wall 60. The rounded circular wall 60 has a curvilinear or convex outer surface which accommodates an interior or concave curve 64 of the depth gauge portion 18. This interiorly curved concave portion 64 allows the tank pressure gauge rounded wall 60 to rotate in a ball and socket manner. The second portion 20 can be somewhat described as a ball configuration with opposite flat truncated faces. In effect, the concave rounded wall portion 64 serves as a socket for the outer wall convex portion 60 so that a ball and socket function for rotational movement is effectuated between respective portions 20 and 18.

It should be noted that when the depth gauge or first portion 18 turns with respect to the tank pressure gauge portion 20, a 180° turn provides for an angular or canted orientation of the face of the depth gauge portion with respect to the face of the tank pressure gauge 50 or compass 52. Thus, a tilted angular or canted orientation of the depth gauge or first portion 18 is provided for the ease and facility of viewing purposes. Fundamentally, the ball and socket arrangement of the convex wall 60 and interior socket curved or concave wall 64 of the respective portions 20 and 18 allow for an angular orientation of the depth gauge portion 18 so that it is always tilted toward whatever instrument (i.e. the compass 52, or the tank gauge 50) for viewing purposes.

Looking more particularly at Figures 2 through 6, it can be seen how the connection between portions 18 and 20 is effectuated. Turning to Figure 3, it can be seen that the 14 having ribs 16 surrounds the high pressure hose 12. The high pressure hose 12 is connected by a high pressure fitting 70 which seats into the movement of the tank pressure gauge 50. The tank pressure gauge 50 can be a standard bourdon tube tank pressure gauge. It can also be of any other type such as a digital meter, digital readout without a meter, or other means to provide a reading of the tank pressure by the tank pressure gauge or pressure reading instrument 50. The tank pressure gauge 50 is seated in the second portion 20 as can be seen in Figure 3 under the rounded circular lip 54. It is held in position by the elastomeric characteristics of the rubber forming the boot holding it in tightened juxtaposition.

The compass 52 with its bezel 56 is seated into a pocket opposite from that of the tank pressure gauge 50. This is accomplished by emplacing the compass 52 into tightened juxtaposition with a flange thereof seated within a groove 80 of the boot gauge portion 20. The flange of the compass 52 can be seen as an external flange 82 that is circumferentially oriented around the compass 52.

In order to couple the rounded second portion 20 by virtue of the walls 64 of the portion 18 seating against the walls 60 of the second portion 20, a T shaped extension 86 is utilized. The T shaped extension 86 is of a relatively flexible rubber material. The extension 86 has an opening or cavity 88 therein. The opening or cavity 88 is such wherein it allows for a collapsing of the T shaped extension 86.

The T shaped extension 86 comprises an outer flange or transverse portion of the T 90 and an undercut or groove forming an upright of the T 92 which surrounds the opening or cavity 88. This undercut or groove 92 allows for a seating of the T shaped member or extension 86 within an opening formed as a stepped groove configuration having an interior bore 94 and a stepped groove or ledge 96. These two openings, bore 94 and stepped groove or ledge 96 are T shaped in section to receive the T shaped extension 86 therein.

The receipt is accomplished as shown in Figure 4 by collapsing the T shaped extension 86 and sliding it into the bore 94 and behind the ledge of the groove 96. After they have slid together as can be seen in Figure 5, the extension 86 expands outwardly and fills the bore 94 and the groove or ledge 96 with the respective upright and transverse elements of the elastomeric T shaped extension 86.

Looking now at Figure 6, it can be seen that a plastic U shaped member or grommet 100 having an outer circular flange 102 has been emplaced within the interior cavity 88 of the T shaped extension member 86. The U shaped member or grommet 100 seats into the interior cavity 88 of the T shaped extension 86 while the outer flange 102 seats into an interior groove 106 of the T shaped member 86. Groove 106 has been shown in Figure 5 and is the interior groove of the T shaped extension having been shown in Figure 3.

The U shaped member 100 can be any stiffening means such as a plastic or metal grommet, a spring loaded locking spring, or other means which can be emplaced in the direction of arrow I of Figure 6 into the interior groove 106. Also any other means to expand the T shaped member 86 outwardly so that it backs and is locked up against the walls or ridge of groove or ledge 96 is sufficient.

It should be understood that the coupling means can be by any member such as the extension or T shaped member 86 which is journaled within an opening to which it can be seated and retained for rotational movement. Such an extension as T shaped member 86 when retained and journaled within the retention area such as the stepped bore 94 and groove or ledge 96 provide the function of the rotational aspects of the depth gauge portion 18 turning in relative relationship to the tank gauge and compass portion 20.

In order to emplace the depth gauge 34 into the depth gauge portion 18, it is merely slid into the expandable elastomeric walls 40 of the depth gauge pocket or cavity 32. After being slid into the expanding walls 40, it is secured by means of an outer flange 120 of the depth gauge 34 being seated within a groove or undercut 122 of the first portion 18. The flange 120 when seated in the direction of arrow P serves to hold the locking or retention grommet, U shaped member, or securement means 100 into the relationship it enjoys within the groove 106 and interior cavity 88 of the T shaped extension 86.

Within the concave wall 64, are two grooves or slots 140. The grooves or slots 140 can be seen in Figure 3 as well as Figures 2 and 2A in the detail of Figure 2. The grooves or slots 140 are such wherein they can receive a detent or protuberance 142.

The grooves 140 are emplaced on either side of the bore 94 within the wall 64 approximately 180° apart. The grooves 140 and detents 142 are roughly in a mid-line along the concave wall 64. They are placed in a manner so that they can provide detent locking of the depth gauge portion 18 from rotation with respect to the tank pressure gauge and compass portion 20. When the depth gauge portion 18 has been rotated, the depth gauge 34 due to the grooves 140 and the detent 142 alignment, causes the respective faces of the depth gauge 34 and respective tank pressure gauge 50 or compass 52 to be in upward facing appearance with respect to each other so that they are not rotationally disoriented.

Fundamentally, the detent and groove locking arrangement of the detents 142 and grooves 140 allow for an orientation after the respective first and second portions 18 and 20 are rotated with respect to each other to be in a proper viewing position. In effect, the tank pressure gauge 50 when placed in viewing orientation with the depth gauge 34 is held by the orientation of the detents 142 locking and snapping into the grooves 140 and holding it in that position until the portions 18 and 20 are later turned with respect to each other.

The depth gauge portion 18 and tank pressure and compass portion 20 can be rotationally oriented along their axes. The respective gauge faces are then offset from each other rather than being in an aligned axial relationship. However, it is thought that the respective locking in the aligned facial relationship by the grooves 140 locking into the detents 142 is the generally accepted gauge reading mode. In effect, the gauges in the first and second portions 18 and 20 can be turned on their axes with respect to each other so that they are not in an exact facial alignment but rotationally offset.

The net result of the foregoing structure is to allow for the ability of a gauge boot having a gauge or instrument on either side thereof to be rotated with respect to another portion so that the other portion having a gauge or instrument therein can be read with respect to either gauge in the first portion. In effect, either portion can be rotated through the ball and socket aligned relationship to provide for a gauge reading with respect to one or the other of another portion. The depth gauge or first portion 18 can be provided with another pocket, cavity, or means for holding a second instrument to provide for a double gauge or instrument orientation first portion 18.

The gauge boot of this invention as can be seen incorporates the concept of a pivotal or rotationally oriented gauge boot that is divided into two sectors or portions. The two respective sectors or portions can be turned with respect to each other whereby one portion incorporates a plurality of instruments that can be turned with respect to another portion which incorporates a single or plural number of instruments that can be read with respect to one of the other instruments.

The rotational orientation is enhanced by a fixed locking means to orient the gauges into whatever position is necessary. The gauges or instruments can also be oriented to various angles by having multiple detents and grooves oriented at different radial angles from the axis of rotation such as grooves 140 and detents 142. The gauges can be differently oriented as to being part of a grouping where they are back to back in one particular portion of the gauge boot such as portions 18 or 20. They can also be oriented on the sides thereof so that they can turn and be viewed with respect to a side view or angular view with respect to the other gauges to which the gauges of one portion can be read with respect to the other.

As a consequence hereof, this invention should be read to incorporate the concept of multiple gauges being mounted on opposite sides of one portion that can be turned with respect to another gauge portion. Also, from the narrowest point of view, the invention can be read as to a depth gauge that is rotationally oriented with regard to gauges or instruments such as a compass and a tank pressure gauge mounted on opposite sides so that one or the other can be read with respect to a depth gauge by virtue of each instrument being opposite from each other on the other side of one rotational portion of the gauge boot.

## Claims

1. A gauge boot (10) for a diving apparatus comprising:
a first portion (18) of said gauge boot (10) having a depth gauge (34) therein;
a second portion (20) of said gauge boot (10) having a tank pressure gauge (50) therein with a connection means (14) adapted for connection to a tank of breathing gas, as well as a second instrument (52) therein;
characterized that the second instrument (52) is positioned on the opposite side from said tank pressure gauge (50), and the gauge boot (10) includes means for rotationally mounting said second portion (20) to said first portion (18) so that said depth gauge (34) can he turned to be read in combination with said tank pressure gauge (50) or the second instrument (52).

2. The gauge boot as claimed in claim 1 further characterized by said gauge boot (10) being formed of an elastomeric material.

3. The gauge boot as claimed in claim 1 or 2 further characterized by said second instrument in said second portion (20) being a compass (52).

4. The gauge boot as claimed in one of claims 1 to 3 further characterized by a slot (42) within a side wall of said gauge boot (10) having an opening therein and a pin (44) extending across said opening for receipt of a lanyard thereby.

5. The gauge boot as claimed in one of claims 1 to 4 further characterized by rotational connection means formed as a T shaped extension (86) from one of said portions of said gauge boot (10), and means for receiving (94, 96) said T shape portion in the other portion of said gauge boot.

6. The gauge boot as claimed in claim 5 further characterized by said extension comprising a T shaped member (86) having a cavity (88) therein with a groove (92), and the portion for receiving said T shaped extension includes a bore (94) and a stepped groove (96) for receiving the transverse portion of said T shaped member and having a grommet (100) for expanding the groove of said T shaped member into said stepped groove.

7. The gauge boot as claimed in one of claims 1 to 6 further characterized by including a detent means (142) on one of said portions for engaging at least one groove (140) on the other portion to index rotation beyond a given point of one portion with respect to the other portion.

8. The gauge boot as claimed in claim 7 further characterized by said detent means being a slot on said first portion (10) and a detent extending from said second portion (20), and wherein the point of contact between said first and second portions is a rounded walled curvilinear portion for receipt within a partial arcuate wall.

9. The gauge boot as claimed in claim 8 further characterized by said depth gauge (34) being mounted within said first portion (18) so as to tilt said depth gauge toward the second portion (20) of said gauge boot.

10. The gauge boot as claimed in claim 1 further characterized by a wall (64) within said first portion (18) configured as a segment of a socket; a wall portion (60) on said second portion (20) configured as a portion of a rounded ball type element to fit within the socket of said first portion; a groove within said first portion socket wall, and detent means on the mounted portion of said ball of said second portion for receipt within said groove portion so that said first portion can be relatively turned in rotational movement with respect to said second portion and provided with an indexing means by said detent engaging in the groove.

11. The gauge boot as claimed in claim 10 further characterized by said first portion (18) being canted toward said second portion (20) so that a depth gauge (34) when mounted in said first portion (18) is tilted for viewing purposes with respect to the tank pressure gauge (50) of said second portion (20) or compass (52).

## Patentansprüche

1. Meßgeräteträger (10) für ein Tauchgerät, umfassend:
einen ersten Abschnitt (18) des Meßgeräteträgers (10) mit einem Tiefenmesser (34); und
einen zweiten Abschnitt (20) des Meßgeräteträgers (10) mit einem ein Anschlußmittel (14) zum Anschluß an eine Atemgasflasche aufweisenden Flaschendruckmesser (50) sowie einem zweiten Instrument (52) ;
dadurch gekennzeichnet, daß das zweite Instrument (52) auf der dem Flaschendruckmesser (50) entgegengesetzten Seite angeordnet ist, und daß der Meßgeräteträger (10) Mittel aufweist, mittels welchen der zweite Abschnitt (20) derart drehbar an dem ersten Abschnitt (18) anbringbar ist, daß der Tiefenmesser (34) drehbar und gemeinsam mit dem Flaschendruckmesser (50) oder dem zweiten Instrument (52) ablesbar ist.

2. Meßgeräteträger nach Anspruch 1, dadurch gekennzeichnet, daß der Meßgeräteträger (10) aus einem elastomeren Material besteht.

3. Meßgeräteträger nach Anspruch 1 oder 2, dadurch gekennzeichnet, daß das zweite Instrument in dem zweiten Abschnitt (20) ein Kompaß (52) ist.

4. Meßgeräteträger nach einem der Ansprüche 1 bis 3, gekennzeichnet durch eine eine Öffnung in einer Seitenwand des Meßgeräteträgers (10) bildende Vertiefung (42) und einen quer durch die Öffnung verlaufenden Stift (44), an dem eine Befestigungsleine anbringbar ist.

5. Meßgeräteträger nach einem der Ansprüche 1 bis 4, gekennzeichnet durch als T-förmige Erweiterung (86) eines der Abschnitte des Meßgeräteträgers (10) ausgebildete Drehanschlußmittel, und Mittel (94, 96), die den T-förmigen Abschnitt im anderen Abschnitt des Meßgeräteträgers aufnehmen.

6. Meßgeräteträger nach Anspruch 5, dadurch gekennzeichnet, daß die Erweiterung ein T-förmiges Element (86) mit einer darin angeordneten Ausnehmung (88) und einer Nut (92) umfaßt, daß der die T-förmige Erweiterung aufnehmende Abschnitt eine Bohrung (94) und einen abgesetzten Einschnitt (96), der den Querteil des T-förmigen Elements aufnimmt, aufweist, und an dem T-förmigen Element eine Gummitülle (100) angeordnet ist, die die Nut des T-förmigen Elements in den abgesetzten Einschnitt aufweitet.

7. Meßgeräteträger nach einem der Ansprüche 1 bis 6, gekennzeichnet durch ein Feststellmittel (142) an einem der Abschnitte, welches in zumindest eine Nut (140) an dem anderen Abschnitt eingreift, um eine Drehung über einen gegebenen Punkt eines Abschnitts hinaus bezüglich des anderen Abschnitts zu schalten.

8. Meßgeräteträger nach Anspruch 7, dadurch gekennzeichnet, daß das Feststellmittel aus einer Vertiefung an dem ersten Abschnitt (10) und einer aus dem zweiten Abschnitt (20) vorstehenden Arretierung besteht, wobei der Berührungspunkt zwischen dem ersten und dem zweiten Abschnitt ein krummliniger Abschnitt mit abgerundeten Wandungen ist, der in eine teilweise gekrümmte Wandung eingreift.

9. Meßgeräteträger nach Anspruch 8, dadurch gekennzeichnet, daß der Tiefenmesser (34) derart in dem ersten Abschnitt (10) angebracht ist, daß der Tiefenmesser gegenüber dem zweiten Abschnitt (20) des Meßgeräteträgers schräg gestellt ist.

10. Meßgeräteträger nach Anspruch 1, gekennzeichnet durch eine Wandung (64) in dem ersten Abschnitt (10), die als Aufnahmesegment ausgebildet ist; einen Wandabschnitt (60) auf dem zweiten Abschnitt (20), der als Abschnitt eines ballförmig gerundeten Elements ausgebildet ist, um in das Aufnahmesegment des ersten Abschnitts zu passen; eine Nut in der Aufnahmewandung des ersten Abschnitts; und Feststellmittel an dem angebrachten Abschnitt des Balles des zweiten Abschnitts, die in den Nutabschnitt eingreifen, so daß der erste Abschnitt einer Drehbewegung folgend relativ zu dem zweiten Abschnitt drehbar ist, und die aufgrund der in die Nut eingreifenden Arretierung mit einem Schaltmittel versehen sind.

11. Meßgeräteträger nach Anspruch 10, dadurch gekennzeichnet, daß der erste Abschnitt (10) zu dem zweiten Abschnitt (20) hin geneigt ist, so daß ein in dem ersten Abschnitt (10) angebrachter Tiefenmesser (34) zur Ablesung gegenüber dem Flaschendruckmesser (50) des zweiten Abschnitts (20) oder dem Kompaß (52) schräg gestellt ist.

## Revendications

1. Console avec instruments de mesure (10) pour un dispositif de plongée comprenant:
une première portion (18) de ladite console avec instruments de mesure (10) contenant un profondimètre (34);
une seconde portion (20) de ladite console avec instruments de mesure (10) contenant un manomètre de contrôle de pression de réservoir (50) avec un moyen de connexion (14) prévu pour être connecté à un réservoir de gaz respiratoire, et contenant un second instrument (52) ;
caractérisée en ce que le second instrument (52) est situé à l'opposé dudit manomètre de contrôle de pression de réservoir (50), et en ce que la console avec instruments de mesure (10) comporte un moyen pour monter à rotation ladite seconde portion (20) sur ladite première portion (18) de sorte que ledit profondimètre (34) puisse être tourné pour être lu en association avec ledit manomètre de contrôle de pression de réservoir (50) ou le second instrument (52).

2. Console avec instruments de mesure selon la revendication 1, caractérisée en outre en ce que ladite console avec instruments de mesure (10) est formée d'un élastomère.

3. Console avec instruments de mesure selon la revendication 1 ou 2, caractérisée en outre en ce que ledit second instrument dans ladite seconde portion (20) est une boussole (52).

4. Console avec instruments de mesure selon l'une quelconque des revendications 1 à 3, caractérisée en outre par une encoche (42) à l'intérieur d'une paroi latérale de ladite console avec instruments de mesure (10) contenant un orifice et ayant une goupille (44) s'étendant de part et d'autre dudit orifice pour recevoir ainsi un cordon.

5. Console avec instruments de mesure selon l'une quelconque des revendications 1 à 4, caractérisée en outre par un moyen de connexion rotatif formé comme une saillie (86) en T à partir d'une desdites portions de ladite console avec instruments de mesure (10), et un moyen (94, 96) pour recevoir ladite portion en T dans l'autre portion de ladite console avec instruments de mesure.

6. Console avec instruments de mesure selon la revendication 5, caractérisée en outre en ce que ladite saillie comprend un organe (86) en T contenant une cavité (88) avec une gorge (92) et en ce que la portion pour recevoir ladite saillie en T comporte un trou (94) et une gorge à gradins (96) pour recevoir la portion transversale dudit organe en T et ayant un oeillet (100) pour emboîter par dilatation la gorge dudit organe en T dans ladite gorge à gradins.

7. Console avec instruments de mesure selon l'une quelconque des revendications 1 à 6, caractérisée en outre en ce qu'elle comporte un moyen de butée (142) sur l'une desdites portions pour engager au moins une gorge (140) sur l'autre portion pour bloquer la rotation d'une portion par rapport à l'autre portion au-delà d'un point donné.

8. Console avec instruments de mesure selon la revendication 7, caractérisée en outre en ce que ledit moyen de butée est une encoche sur ladite première portion (10) et en ce qu'une butée s'étend depuis la seconde portion (20) et où le point de contact entre lesdites première et seconde portions est une portion curviligne arrondie de paroi destinée à être reçue à l'intérieur d'une paroi arquée partielle.

9. Console avec instruments de mesure selon la revendication 8, caractérisée en outre en ce que ledit profondimètre (34) est monté à l'intérieur de ladite première portion (10) de façon à incliner ledit profondimètre vers la seconde portion (20) de ladite console avec instruments de mesure.

10. Console avec instruments de mesure selon la revendication 1, caractérisée en outre par une paroi (64) à l'intérieur de ladite première portion (18) formée comme un segment d'un logement; une portion de paroi (60) sur ladite seconde portion (20) formée comme une portion d'un organe arrondi de type rotule pour s'insérer dans le logement de ladite première portion; une gorge à l'intérieur de ladite paroi du logement de la première portion, et un moyen de butée sur la portion assemblée de ladite rotule de ladite seconde portion destiné à être reçu à l'intérieur de ladite portion de gorge de façon à ce que ladite première portion puisse être tournée de manière relative dans un mouvement de rotation par rapport à ladite seconde portion et pourvu d'un moyen de blocage par ladite butée s'engageant dans la gorge.

11. Console avec instruments de mesure selon la revendication 10, caractérisée en outre en ce que ladite première portion (18) est penchée vers ladite seconde portion (20) de sorte qu'un profondimètre (34), lorsque monté dans ladite première portion (18), soit incliné par rapport au manomètre de contrôle de pression de réservoir (50) de ladite seconde portion (20) ou à la boussole (52) pour faciliter la lecture.
